# NEW EUROPEAN PATENT SPECIFICATION

(11) **EP 0 109 208 B2**
(45) Date of publication and mention of the opposition decision: **04.08.1993**
(45) Mention of the grant of the patent: 18.05.1988
(21) Application number: 83306380.3
(22) Date of filing: 20.10.1983
(51) Int. Cl.: G02B 21/34

(54) **Microscope slides with a marking surface**
Objektträger mit Markierungsoberfläche
Verre porte-objet avec surface de marquage

(30) Priority: 15.11.1982 US 441448
(43) Date of publication of application: 23.05.1984
(73) Proprietor: ERIE SCIENTIFIC COMPANY (a Delaware Corporation), Portsmouth, New Hampshire 03801 (US)
(72) Inventor: Melisz, John M., Portsmouth New Hampshire (US); Jellinek, Frank H., Jr., Rye New Hampshire (US)
(74) Representative: Ackroyd, Robert

(56) References cited:
- CH-A- 400 607
- GB-A- 10 701
- US-A- 4 087 154
- US-A- 4 188 246
- US-A- 4 190 314
- Annals of New York academy of ciences, vol. 177, June 21, 1971, first page, first page of contents, pages 134, 135, 446 and 447.
- Generalkatalog 1964 der Firma Rudolf Brand (page 174), front page and page 174.
- Katalog Nr. 66 "SCHOTT Glas für Laboratorien", pages 22 to 25.
- Walter Wittemberger Chemische Laboratoriumstechnik, 7. Auflage, 1973, page 50.
- Meyers Lexikon der Technik und der exakten Naturwissenschaften, 1970.
- Kunststoff-Lexikon (Carl Hanser Verlag München, Wien 1981.

## Description

This invention relates to microscope slides and is concerned more particularly with those having at least one specially-prepared portion providing a marking or writing surface.

Typical microscope slides of the prior art include a "frosted" portion as a marking surface. This frosted area is created by sandblasting, acid-etching, mechanical abrading or some other method of roughening the surface of the glass, so that a permanent marking surface is created which can accept markings made by means of a pen, pencil or other marking instrument. All of these techniques create a frosted surface by removing material from the glass surface and therefore necessarily result in a marking surface which is recessed below or is certainly no higher than the surface of the glass slide. Furthermore, such frosting of the glass, while providing a matte surface on the glass, does not produce a marking surface having a pronounced background which contrasts notably with information marked upon it.

This invention seeks to provide an improved form of microscope slide which has a number of advantages as compared with the marking surfaces of known slides.

In accordance with the present invention, a microscope slide is provided as defined in claim 1

With a microscope slide of the invention, not only is the marking surface raised, in relation to the surface of the glass slide, but it can also be made absorptive and receptive of marking materials, it can be pigmented so as to have good visual contrast properties, it can be made resistant to a variety of laboratory solvents, reagents, stains or chemicals and may also be produced in a variety of colours, so as to facilitate colour coding.

The fluid material also includes a granular medium which imparts porosity to the solidified coating layer and a pigment which provides a visual contrast to the marking surface, to enhance the visibility of markings made thereon. The marking surface provides a clearance space between successive slides in a stack thereof. and, in a preferred form of the microscope slide of the invention, is made so that it serves to provide a barrier to the movement of a liquid sample placed upon the slide.

In order that the invention may be fully understood, a microscope slide is described below in conjunction with the accompanying drawing, in which:
Figure 1 shows a top plan view of the microscope slide according to this invention;
Figure 2 shows a front elevational view of the slide of Figure 1;
Figure 3 shows a stack of such slides as packaged.

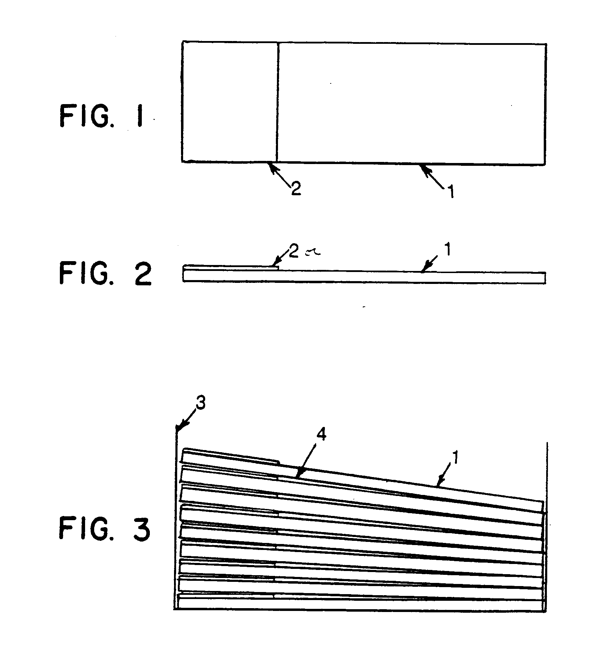

Referring to Figures 1 and 2, a glass microscope slide is shown at 1, having conventional length, width and thickness. On a portion thereof, namely the lefthand end as shown in the drawing, a coating layer 2 of an epoxy or other resinous fluid material is added, this coating layer 2 being formed by applying a coating of the fluid material and allowing the coating to dry, set or otherwise solidify into the form of the layer 2. The coating layer2 has a finite thickness and therefore provides a raised surface 2a relative to the surface 1 a of the glass slide 1.

The epoxy or other coating layer 2 applied to the glass slide 1 includes a pigment to enable it to provide a bright contrasting background (e.g. white or various colours) when used to receive markings and therefore to provide good visibility for any markings placed thereon. The epoxy or other resinous fluid material also includes a granular medium to impart porosity and a permanent matte finish to the coating layer 2, for accepting markings for individually identifying the final use of the slide 1. This coating layer surface 2a accepts markings made by all commonly used laboratory marking instruments and media, such as felt- tip pens, india ink, ballpoint pens and pencils. The surface 2a of the coating layer is absorptive in character and is capable of holding and retaining markings, even during laboratory procedures, in which laboratory solvents and chemicals are commonly used, and as well as or even better than frosted glass surfaces, depending on the characteristics of the marking device.

Conventional etched or sandblasted slides do not ensure such permanent identification. In addition, the common practice of attaching adhesive-backed paper labels to slides does not provide permanent labelling, because such paper labels are liable to fall off, peel off or wash off when contacted by solvents and the like.

Figure 3 illustrates an additional benefit of the microscope slides 1 of this invention. When the slides 1 are packaged in a stack, as in a container 3, the finite thickness of the coating layer 2 provides a small but significant amount of spacing 4 between the slides 1 in a stack, thereby avoiding contact of the surface of one slide with that of another. This eliminates or reduces abrasion between the slides 1 and prevents the slides from sticking to one another. Consequently, the slides of the invention are cleaner, scratch-free and more easily handled.

It will be appreciated that the relative dimensions of the glass slide 1 and the coating layer in the drawing are exaggerated for the sake of illustration. In practice, the raised surface 2a provided by the coating layer 2 is typically located above the surface 1a of the slide 1 per se by a distance in the range from 0.0075 to 0.020 mm. This coating layer 2 nevertheless provides an effective mechanical barrier to the flow of liquid, e.g. a specimen placed on the slide surface 1a, in the direction towards the raised marking surface 2a.

## Claims

1. A microscope slide
comprising a glass plate having at least one marking surface only on one end portion thereof,
in which
the marking surface is a raised surface and also provides a clearance space between successive slides in a stack thereof, thereby avoiding contact of the surface of one slide with that of another and preventing the slides from sticking to one another
said marking surface being formed by applying a coating of a fluid material to the glass plate and allowing the coating to dry or otherwise become solid
said fluid material is a resinous material which also includes a granular medium which imparts porosity to the solidified coating layer and a pigment which provides a visual contrast to the marking surface, to enhance the visibility of markings made thereon.

2. A microscope slide according to claim 1,
wherein the marking surface provides a barrier to the movement of a liquid sample placed upon the slide.

3. A microscope slide according to claim 2,
wherein the resinous material is an epoxy resinous material.

## Patentansprüche

1. Objektträger,
bestehend aus einer Glasplatte, die nur an einem ihrer Endbereiche mindestens eine Markierungsoberfläche aufweist
bei dem
die Markierungsoberfläche eine erhabene Oberfläche ist und darüber hinaus zwischen aufeinanderfolgenden Objektträgern innerhalb eines Stapels einen Zwischenraum bildet, wodurch ein Kontakt der Oberfläche eines Objektträgers mit derjenigen eines anderen Objektträgers vermieden und verhindert wird, daß die Objektträger aneinander haften,
bei dem die Markierungsoberfläche weiterhin durch Auftragen einer aus einem Fluid bestehenden, durch Trocknen oder anderweitig erhärtenden Beschichtung auf der Glasplatte erzeugt wird
und bei dem das Fluid ein harzhaltiges Material ist und auch ein granulares Medium, welches der erhärteten Beschichtung Porosität verleiht, sowie ein Pigment enthält, welches der Markierungsoberfläche zur Verbesserung der Erkennbarkeit von auf ihr befindlichen Markierungen einen sichtbaren Kontrast verleiht.

2. Objektträger nach Anspruch 1
bei dem die Markierungsoberfläche eine Sperre für die Bewegung einer auf ihn aufgebrachten flüssigen Probe bildet.

3. Objektträger nach Anspruch 2
bei dem das harzhaltige Material ein epoxydharzhaltiger Stoff ist.

## Revendications

1. Lame porte-objet, comprenant une plaque de verre comportant au moins une surface de marquage sur seulement une partie terminale de sa surface, dans laquelle la surface de marquage est une surface surélevée, et donne également lieu à un espace intermédiaire entre des lames voisines dans une pile de celles-ci, en évitant ainsi le contact de la surface d'une lame avec celle d'une autre et en empêchant les lames de coller l'une à l'autre, ladite surface de marquage étant formée en appliquant une couche d'une matière fluide sur la plaque de verre et en laissant la couche sécher ou se solidifier d'une autre manière, ladite matière fluide étant une matière résineuse qui contient également une substance granulaire qui donne de la porosité à la couche de revêtement solidifiée, ainsi qu'un pigment qui crée un contraste visuel sur la surface de marquage, afin d'améliorer la visibilité des inscriptions portées sur elle.

2. Lame porte-objet selon la revendication 1, dans laquelle la surface de marquage constitue une barrière au mouvement d'un échantillon liquide placé sur la lame.

3. Lame porte-objet selon la revendication 2, dans laquelle la matière résineuse est une matière à base de résine époxy.
